Europäisches Patentamt

European Patent Office

Office européen des brevets

(19)

(11) Numéro de publication: **0 275 756**
**A1**

(12)

# DEMANDE DE BREVET EUROPEEN

(21) Numéro de dépôt: **87402867.3**

(22) Date de dépôt: **15.12.87**

(51) Int. Cl.⁴: **G01V 3/08**

(30) Priorité: **17.12.86 FR 8617666**

(43) Date de publication de la demande:
**27.07.88 Bulletin 88/30**

(84) Etats contractants désignés:
**AT BE CH DE ES GB GR IT LI LU NL SE**

(71) Demandeur: **Société d'Assistance Technique aux Industries Electroniques, Pneumatiques, Hydrauliques, SARL:**
**Rue Parmentier BP 19**
**F-85110 Chantonnay(FR)**

(72) Inventeur: **Thomas, Jean**
**Rue Saint Hilaire**
**F-85110 Chantonnay(FR)**
Inventeur: **Garnier, Jean-Claude**
**84 Rue de la Forêt**
**F-85480 Fougère(FR)**
Inventeur: **Rangeard, Gilbert**
**54 Rue Mg Masset**
**F-85500 Ardelay(FR)**

(74) Mandataire: **Lemonnier, André**
**4 Boulevard Saint-Denis**
**F-75010 Paris(FR)**

(54) **Détecteur de proximité entre une masse métallique et un élément sous tension électrique.**

(57) La présente invention concerne un détecteur de proximité entre une masse métallique (1-2) et un élément sous tension électrique comportant un circuit électrique alimentant un dispositif de sécurité - (25) tel que la bobine de commande d'un disjoncteur, le contacteur d'alimentation d'un moteur contrôlant le déplacement de la masse, une alarme auditive ou visuelle ou une mise à la terre d'urgence, ce circuit comportant un élément normalement non conducteur rendu conducteur par l'apparition d'un potentiel sur la masse métallique (1) à protéger ou l'antenne (2).

Conformément à l'invention ledit circuit électrique est alimenté par une source autonome d'alimentation en courant continu (6), ledit circuit électrique comportant au moins un élément normalement non conducteur (8) qui est rendu conducteur par l'apparition d'un potentiel entre la masse métallique à protéger et un point à potentiel fixe du circuit électrique.

L'invention permet la protection contre les tensions apparaissant dans une masse métallique isolée telle qu'un engin de travaux publics.

## Détecteur de proximité entre une masse métallique et un élément sous tension électrique.

La présente invention concerne un dispositif de sécurité capable de détecter la présence, à proximité d'une masse métallique qui peut être notamment un engin de travaux publics, d'un élément sous tension électrique alternative tel qu'un câble électrique et, à plus forte raison, la mise en contact de ladite masse avec une source de potential.

On a déjà proposé dans de nombreux brevets des dispositifs de sécurité détectant la mise sous tension d'une structure métallique,ces dispositifs agissant en général en parallèle avec un parafoudre et assurent la commande de divers dispositifs tels que des disjoncteurs ou des avertisseurs. Tous les appareils ont en commun d'utiliser la conductivité d'un élément tel que diac, phototransistor ou autre détecteur de tension lorsque le potentiel de la masse métallique par rapport à neutre ou à la terre dépasse le seuil de fonctionnement dudit élément, le courant qui s'écoule à travers l'élément devenu conducteur étant utilisé pour commander un dispositif de sécurité tel que disjoncteur, mise à la terre ou tout autre système d'alerte.

La conception de tous ces détecteurs de surtension nécessite l'existence d'un neutre ou d'une terre constituant le deuxième pôle du détecteur de tension, le premier pôle étant constitué par la masse métallique à protéger elle-même ou plus exactement par le conducteur sous tension avec lequel ladite masse vient en contact. Si ces dispositifs sont facilement adaptables sur des machines à poste fixe auxquelles on peut amener un neutre ou à des engins circulant sur rails, les rails pouvant être à la terre, la solution n'est pas applicable aux masses métalliques mobiles normalement isolées du sol telles que les engins de travaux publics ou analogues circulant sur pneumatiques, lesquels sont, plus que les machines fixes, exposés à des contacts accidentels avec des conducteurs sous tension.

Dans FR-A-2.042.404, auquel correspondent DE-A-2.023.114 et US-A-3.673.589, on a décrit un détecteur de présence comportant une antenne mise à la terre par une très grande impédance avec un point intermédiaire entre les résistances en série dont la variation de potentiel est utilisée pour commander la conductibilité d'un transistor à effet de champ. Ce détecteur de présence détecte en fait la variation de la capacité entre l'antenne ou sonde et la terre, sous l'effet capacitif d'une masse, celle de l'intrus, qui pénètre dans l'espace séparant les armatures, antenne et terre. Outre le fait qu'un tel dispositif comme les dispositifs de sécurité ci-dessus nécessite une mise à la terre, il serait inutilisable sur une machine mobile, la valeur de la capacité entre sonde et terre variant continuellement en fonction du déplacement, ce qui aboutirait à une alarme permanente. Ce brevet prévoit d'ailleurs un montage avec capacité et résistance en série pour le rendre insensible aux variations de la charge de l'antenne qui pourraient être produites par des champes électriques.

La présente invention a donc pour but de réaliser un détecteur de proximité d'un élément sous tension électrique susceptible de protéger une masse métallique mobile isolée de la terre telle qu'un engin de travaux publics. Il est bien évident que le détecteur peut également protéger une masse métallique fixe et non isolée, le détecteur étant d'une conception autonome et n'ayant qu'un contact avec la masse métallique à protéger et/ou une antenne associée à la partie de celle-ci susceptible de venir à proximité du conducteur sous tension. En outre, et a fortiori, le dispositif détecte non seulement la proximité mais également le contact de la masse avec un élément sous tension électrique.

La présente invention a pour objet un détecteur de proximité en tre une masse métallique et un élément sous tension électrique comportant un circuit électrique alimentant un dispositif de sécurité tel que la bobine de commande d'un disjoncteur, le contacteur d'alimentation d'un moteur contrôlant le déplacement de la masse, une alarme auditive ou visuelle ou une mise à la terre d'urgence, ce circuit incluant un élément à conductibilité variable dont la conductibilité est modifiée par la variation du potentiel électrostatique auquel est soumise la masse métallique à protéger ou l'antenne,caractérisé en ce que ledit circuit électrique est alimenté par une source autonome d'alimentation en courant continu, la conductibilité de l'élément dont la conductibilité est modifiée par la variation du potentiel électrostatique, étant commandé par le potentiel et un point intermédiaire entre la masse métallique à protéger ou l'antenne et un pôle de la source de courant continu, avec interposition entre ce point intermédiaire et ledit pôle d'un élément résistif ou capacitif.

Selon un mode de réalisation préférentiel applicable notamment pour la détection des tensions alternatives, l'élément du circuit qui assure la détection du potentiel est constitué par un transistor à effet de champ dont la porte est connectée en un point intermédiaire entre la masse métallique ou l'antenne et un pôle de la source continue, avec interposition entre ce point intermédiaire et ledit pôle d'un élément résistif ou capacitif, le circuit source-drain du transistor à effet de champ étant polarisé par la source de courant continu. Le circuit source-drain du transistor à effet de champ étant polarisé sous la tension de l'alimentation en courant continu et la porte étant connectée à l'un des pôles de l'alimentation par un élément résistif ou capacitif, lorsque la masse protégée est isolée, la tension appliquée à la porte est celle dudit pôle qui polarise également la source du transistor et le transistor ne conduit pas. Si par contre la tension de porte varie parce qu'il y a passage d'un courant, à travers l'élément résistif ou capacitif, dudit pôle de l'alimentation vers la masse ou l'antenne portée à une tension différente de celle dudit pôle par contact direct ou par effet capacitif, la polarisation de la porte va être positive ou négative par rapport à celle de la source et le transistor deviendra conducteur par enrichissement ou appauvrissement.

Selon un mode de réalisation préférentiel le courant traversant le transistor à effet de champ contrôle la polarisation de la base d'une transistor bipolaire agissant comme amplificateur et le courant de ce transistor bipolaire détermine la tension appliquée sur la gâchette d'un thyristor dont le courant débité constitue le courant de commande du dispositif de sécurité.

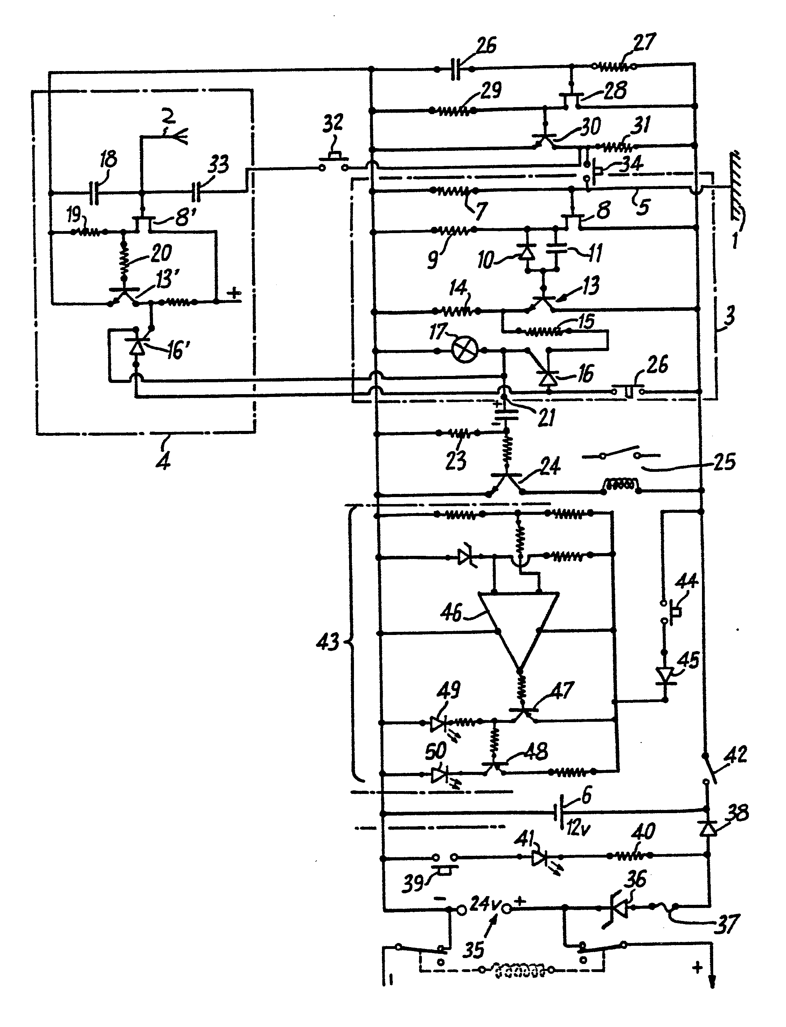

On décrira ci-après un exemple de réalisation du détecteur de proximité conforme à l'invention avec référence au dessin ci-annexé qui en représente le schéma électrique.

Dans les dessins, la référence 1 désigne la masse métallique à protéger, c'est-à-dire le châssis de l'engin, qui risque d'être portée à un potentiel anormal par contact avec un conducteur sous tension tel qu'une ligne électrique ou un câble souterrain. La référence 2 désigne une antenne qui agit par effet capacitif lorsqu'el le est à une distance d'un conducteur à haute tension pouvant atteindre par exemple trois mètres.

Le cadre en traits mixtes 3 entoure la partie du détecteur qui détecte le contact de la masse 1 avec un conducteur sous tension et l'autre cadre 4 entoure la partie du détecteur qui détecte par effet capacitif la proximité entre l'antenne 2 et un conducteur sous tension.

La partie 3 comporte un conducteur 5 relié au pôle négatif d'une source d'alimentation en courant continu, par exemple une batterie 6 de 12 volts, par une résistance 7. Lorsque la masse 1 est isolée, le conducteur 5 est à -12 volts et cette tension appliquée à la porte du transistor à effet de champ 8 branché, avec interposition d'une résistance de charge 9, entre les pôles + et -de la batterie 6, maintient ce transistor à l'état non conducteur. Si la masse 1 est portée à un potentiel positif ou négatif différent de -12 volts un courant circule dans la résistance 7 et la porte est portée à un potentiel différent du potentiel de polarisation du transistor entre source et drain, ce qui provoque une conduction par enrichissement ou appauvrissement.

Le courant circulant dans le transistor 8 est redressé et stabilisé par une diode 10 et un condensateur 11 et dérivé sur la base d'un transistor n-p-n 18. Le courant traversant le transistor 13 est dérivé par une résistance de charge 14 et une résistance de limitation du courant 15 sur la gachette d'un thyristor 16 branché entre les deux pôles de la batterie 6. Le thyristor 16 débite ain si un courant qui allume un voyant 17 dès que la masse 1 est au contact d'un conducteur sous tension.

La partie 4 du détecteur comporte également un transistor à effet de champ 8', lequel commande un transistor n-p-n 13' dont le courant est utilisé pour allumer un thyristor 16'. L'antenne 2 fonctionnant par effet capacitif, la commande par tension de la porte du transistor à effet de champ 8' est assurée en interposant une capacité 18 entre le pôle de polarisation de la batterie 6 et le point commun à l'antenne 2 et à la porte du transistor 8'. Le courant traversant le transistor 8' est réparti par un pont de résistances 19-20 sur la base du transistor n-p-n 13' dont le courant commande la gachette du thyristor 16'. Le thyristor 16' est connecté en parallèle avec le thyristor 16 sur le voyant 17 et sur la sortie 21 des deux parties détectrices par contact direct et par effet capacitif.

La sortie apparaissant sur la borne 21 assure le charge d'un condensateur 22 à travers une résistance de charge 23 et le courant de charge est dérivé sur la base d'un transistor n-p-n 24 connecté dans le circuit de la bobine d'un relais temporisé 25 qui peut commander par exemple l'ouverture de l'électro-vanne contrôlant la projection vers le sol d'un jet d'eau à partir d'une réserve d'eau sous pression connectée électriquement au châssis de l'engin.

L'interrupteur 26 a pour but de remettre les parties détectrices au repos après leur fonctionnement normal ou à titre d'essai. L'essai peut être effectué à partir d'un générateur d'essai fournis sant une tension de valeur suffisante et constitué par une capacité 26 en série avec une résistance 27 entre lesquelles est branchée la porte d'un transistor à effet de champ 28 dont le courant dérivé par une résistance 29 est appliqué sur la base d'un transistor n-p-n 30. La tension apparaissant entre l'émetteur du transistor 30 et une résistance de charge 31 peut être appliquée par un contacteur 32 sur une capacité 33 connectée en parallèle avec l'antenne 2 sur la porte du transistor 8' ou par un contacteur 34 sur la masse 1.

Le schéma électrique comporte en outre un circuit de charge de la batterie 6 à partir de la batterie du véhicule par un relais 35 commandé par la clé de contact du véhicule, une diode zener 36 en série avec un fusible 37 et une diode redresseuse 38. L'état de charge de la batterie du véhicule est contrôlable par un contacteur 39 en série avec une résistance 40 et une diode électroluminescente 41.

La mise en circuit de la batterie 6 dans le circuit est commandée par un interrupteur 42. L'état de charge de la batterie 6 peut être contrôlé par un circuit de type connu désigné dans son ensemble par la référence 43 et mis en circuit par un contacteur 44 en série avec une diode 45 sur l'alimentation du pôle positif. L'amplificateur opérationnel 46 commande par sa sortie deux transistors n-p-n 47 et 48 dont les courants rendent lumineuses la diode électro-luminescente 49 lorsque la tension de la batterie 6 est normale et la diode électro-luminescente 50 lorsque cette tension est trop basse.

Le mode de réalisation ci-dessus décrit est susceptible de diverses modifications sans sortir du cadre des revendications ci-annexées, une seule des deux parties détectrices 3 et 4 pouvant, par exemple, être prévue.

## Revendications

1. Détecteur de proximité entre une masse métallique (1-2) et un élément sous tension électrique comportant un circuit électrique alimentant un dispositif de sécurité (25), tel que la bobine de commande d'un disjoncteur, le contacteur d'alimentation d'un moteur contrôlant le déplacement de la masse, une alarme auditive ou visuelle ou une mise à la terre d'urgence, ce circuit incluant un élément à conductibilité variable dont la conductibilité est modifiée par la variation du potentiel électrostatique auquel est soumise la masse métallique (1) à protéger ou l'antenne (2), caractérisé en ce que ledit circuit électrique est alimenté par une source autonome d'alimentation en courant continu (6), et en ce que la conductibilité de l'élément dont la conductibilité est modifiée par la variation du potentiel électrostatique, est commansée par le potentiel en un point intermédiaire entre la masse métallique (1) à protéger ou l'antenne (2) et un pôle de la source de courant continu (6), avec interposition entre ce point intermédiaire et ledit pôle d'un élément résistif (9) ou capacitif (18).

2. Détecteur de proximité selon la revendication 1, caractérisé en ce que l'élément du circuit qui assure la détection du potentiel est constitué par un transistor à effet de champ (8-8′) dont la porte est connectée au point intermédiaire entre la masse métallique (1) ou l'antenne (2) et un pôle de la source de courant continu (6), avec interposition entre le point intermédiaire et ledit pôle d'un élément résistif (9) ou capacitif (18), le circuit source-drain du transistor à effet de champ étant polarisé par la source (6) de courant continu.

3. Détecteur de proximité selon la revendication 2, caractérisé en ce que le courant traversant le transistor à effet de champ (8-8′) contrôle la polarisation de la base d'un transistor bipolaire (13-13′) agissant comme amplificateur et le courant de ce transistors bipolaire détermine la tension appliquée sur la gâchette d'un thyristor (16-16′) dont le courant débité constitue le courant de commande du dispositif de sécurité (25).

| | | | |
|---|---|---|---|
| Office européen des brevets | **RAPPORT DE RECHERCHE EUROPEENNE** | Numero de la demande | |
| | | EP 87 40 2867 | |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 786 468 (M.M. MOFFITT) <br> * Résumé; colonne 3, ligne 55 - colonne 4, ligne 27; figure 5 * <br> --- | 1-3 | G 01 V 3/08 |
| Y | FR-A-2 129 114 (H. MIZOULE) <br> * Revendication 1, figures 1,2 * <br> --- | 1-3 | |
| D,A | DE-A-2 023 114 (MINNESOTA MINING) <br> --- | | |
| A | AU-B- 26 505 (J.A. HEMPHILL) <br> --- | | |
| A | FR-A-2 514 153 (CENTRE NATIONAL DE LA RECHERCHE SCIENTIFIQUE) <br> ----- | | |
| | | | **DOMAINES TECHNIQUES RECHERCHES (Int. Cl.4)** |
| | | | G 01 V <br> H 03 K |

Le présent rapport a été établi pour toutes les revendications

| Lieu de la recherche | Date d'achèvement de la recherche | Examinateur |
|---|---|---|
| LA HAYE | 21-03-1988 | HAASBROEK J.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
························································
& : membre de la même famille, document correspondant

EPO FORM 1503 03.82 (P0402)